# EUROPÄISCHE PATENTSCHRIFT

(11) **EP 4 327 003 B1**
(45) Veröffentlichungstag und Bekanntmachung des Hinweises auf die Patenterteilung: **01.04.2026**
(21) Anmeldenummer: 22725391.1
(22) Anmeldetag: 22.04.2022
(51) Int. Cl.: F16K 3/08, F16K 3/10, F16K 11/074, F16K 27/04, F01P 7/14, F01P 7/16

(54) **VENTILEINRICHTUNG MIT NIEDERHALTER**
VALVE DEVICE HAVING A HOLD-DOWN ELEMENT
ENSEMBLE SOUPAPE À SERRE-FLAN

(30) Priorität: 23.04.2021 DE 102021204093
(43) Veröffentlichungstag der Anmeldung: 28.02.2024
(73) Patentinhaber: Mack & Schneider GmbH, 70794 Filderstadt (DE)
(72) Erfinder: BACHOFER, Steffen, 70794 Filderstadt (DE)
(74) Vertreter: Clarenbach, Carl-Philipp
(86) Internationale Anmeldenummer: PCT/EP2022/060714
(87) Internationale Veröffentlichungsnummer: WO 2022/223792

(56) Entgegenhaltungen:
- WO-A1-2019/136935
- DE-A1- 102012 106 954
- DE-A1- 102014 221 180
- DE-B3- 102009 007 691
- US-A- 5 950 576

## Beschreibung

Die Erfindung betrifft eine Ventileinrichtung mit einem Ventilgehäuse, das wenigstens zwei Anschlussöffnungen aufweist, die in jeweils eine Kammer des Ventilgehäuses münden, und durch einen Deckel verschlossen ist, mit zumindest einer Dichtscheibeneinheit, die die beiden Kammern in dem Ventilgehäuse voneinander trennt und als Dichtscheiben eine unverdrehbar in dem Ventilgehäuse gehaltene Festscheibe und mindestens eine um eine Drehachse verdrehbar gelagerte Drehscheibe aufweist, wobei die axial aufeinanderliegenden Dichtscheiben jeweils mindestens eine Durchströmungsöffnung aufweisen, um in zumindest einer Überlappungsstellung der Durchströmungsöffnungen miteinander einen Durchströmungsquerschnitt zwischen den Kammern freizugeben, und mit einem Federelement, das zwischen der Drehscheibe und dem Deckel vorgespannt gehalten ist, wobei die Festscheibe auf ihrer von der Drehscheibe abgewandten Unterseite auf einem gehäusefesten Vorsprung axial aufliegt.

Ventileinrichtungen der eingangs genannten Art sind aus dem Stand der Technik bekannt. So offenbart beispielsweise die Offenlegungsschrift DE 10 2012 022 212 A1 eine gattungsgemäße Ventileinrichtung. In einem Ventilgehäuse ist dort eine Dichtscheibeneinheit mit einer Festscheibe und einer Drehscheibe zwei Kammern voneinander trennend angeordnet. Durch das Verdrehen der Drehscheibe können die Durchströmungsöffnungen der beiden Dichtscheiben in eine Überlappungsstellung gebracht werden, um einen gewünschten Durchströmungsquerschnitt zwischen den Kammern freizugeben, sodass die diesen Kammern zugeordneten Anschlussöffnungen strömungstechnisch miteinander verbunden werden. Die Festscheibe liegt dabei auf einem Vorsprung des Ventilgehäuses axial auf, beispielsweise auf einem Zwischenboden. Dadurch ist eine einfache Montage der Festscheibe gewährleistet. Außerdem ist die Festscheibe unverdrehbar in dem Ventilgehäuse gelagert, sodass sich die Position ihrer Durchströmungsöffnung bezüglich der Kammern nicht verändert beziehungsweise nicht verändern kann. Für die gewünschte Dichtwirkung wird die Drehscheibe stirnseitig gegen die Festscheibe axial mithilfe eines Federelements gedrückt oder gepresst, sodass die aufeinanderliegenden Dichtscheiben verhindern, dass ein Fluid von einer Kammer zu der anderen Kammer gelangen kann, wenn die Durchströmungsöffnungen beabstandet zueinander beziehungsweise nebeneinander statt übereinander liegen und keinen Durchströmungsquerschnitt ausbilden.

Üblicherweise liegt die Drehscheibe dabei derjenigen Kammer zugewandt, in welcher der Versorgungsdruck aus einer als Zulauf wirkenden Anschlussöffnung herrscht, so dass die Drehscheibe durch den Versorgungsdruck ebenfalls gegen die Festscheibe gedrückt wird. Weiterhin offenbart Dokument DE 10 2009 007 691 B3 ein Niveauregelventil für eine Luftfederungseinrichtung mit einem sich drehenden Ventilkörper gegenüber einer feststehenden Scheibe.

Der vorliegenden Erfindung liegt die Aufgabe zugrunde, eine verbesserte Ventileinrichtung zu schaffen, die eine erhöhte Robustheit gewährleistet, insbesondere gegen Druckerhöhungen oder - spitzen, die in der Kammer, welcher die Festscheibe zugeordnet oder zugewandt ist, insbesondere Ablaufkammer, auftreten.

Die der Erfindung zugrundeliegende Aufgabe wird durch eine Ventileinrichtung mit den Merkmalen des Anspruchs 1 gelöst. Die erfindungsgemäße Ventileinrichtung hat den Vorteil, dass auch bei Auftreten erhöhter hydraulischer Gegendrücke in der der Festscheibe zugewandten Kammer des Ventilgehäuses die Dichtheit und Unversehrtheit der Ventileinrichtung aufrechterhalten bleibt. Damit kann die Ventileinrichtung auch in Systeme integriert werden, in welchen mit Druckspitzen oder Druckvariationen in einem Abschnitt des Systems zu rechnen ist, der mit der einer als Ablauf dienenden Anschlussöffnung der Ventileinrichtung fluidtechnisch verbunden ist, also mit fluidtechnisch mit der Kammer, die auf der von der Drehscheibe abgewandten Seite der Festscheibe liegt (Ablaufkammer). Durch die Erfindung wird erreicht, dass auch bei Auftreten eines Hydraulikdrucks in der Ablaufkammer, der den Hydraulikdruck und den Druck des Federelements in der Zulaufkammer übersteigt, sich die Festscheibe nicht von dem gehäusefesten Vorsprung axial löst, wodurch die Dichtheit der Dichtscheibeneinheit gewährleistet bleibt. Auch wird dadurch gewährleistet, dass die Festscheibe nicht die Drehscheibe verschiebt oder verkippt, sodass diese in dem Ventilgehäuse verklemmen und eine weitere Betätigung der Ventileinrichtung verhindern könnte. Dadurch wird die Robustheit der Ventileinrichtung insgesamt deutlich gegenüber vorbekannten Ventileinrichtungen erhöht und die Einsatzmöglichkeiten der Ventileinrichtungen werden erweitert.

Die erfindungsgemäße Ventileinrichtung mit den Merkmalen des Anspruchs 1 zeichnet sich dadurch aus, dass in dem Ventilgehäuse ein Niederhalter angeordnet ist, der an der Festscheibe einerseits und an dem Deckel andererseits axial anliegt. Damit stützt sich die Festscheibe axial durch den Niederhalter an dem Deckel der Ventileinrichtung ab und ist formschlüssig an einem Verlagern und insbesondere Lösen von dem gehäusefesten Vorsprung gehindert. Dadurch kann die Festscheibe auch nicht die Drehscheibe in ihrer Funktion beeinträchtigen und die Robustheit der Ventileinrichtung, wie obenstehend beschrieben, wird erreicht. Der Niederhalter bewirkt somit eine formschlüssige Abstützung der Dichtscheibe an dem Deckel des Ventilgehäuses unabhängig von der Federkraft des Federelements, die durch die Drehscheibe ebenfalls auf die Festscheibe zum Niederhalten wirkt. Vorzugsweise wird die Festscheibe durch die Niederhalter und Deckel gegen den gehäusefesten Vorsprung gepresst oder gedrängt, sodass die Festscheibe axial spielfrei auf dem Gehäusevorsprung aufliegt.

Erfindungsgemäß weist der Niederhalter mehrere Längsstreben auf, die jeweils an der Festscheibe und an dem Deckel axial anliegen. Die Längsstreben erstrecken sich insbesondere axial beziehungsweise parallel zur Drehachse der Drehscheibe durch das Ventilgehäuse und stoßen einendig an die Festscheibe und anderendig an den Deckel an, um die Kraftübertragung von dem Deckel auf die Festscheibe zu bewirken. Die Längsstreben oder Axialstreben stützen somit die Festscheibe an dem Deckel ab. Vorzugsweise sind die Längsstreben gleichmäßig über den Umfang der Festscheibe verteilt angeordnet, um eine gleichmäßige Kraftbeaufschlagung der Festscheibe beziehungsweise eine gleichmäßige Abstützung der Festscheibe in dem Ventilgehäuse zu gewährleisten. Vorzugsweise sind die Längsstreben als Balken mit einem kreisförmigen, quadratischen oder rechteckförmigen Querschnitt ausgebildet. Insbesondere der rechteckförmige Querschnitt erlaubt eine hohe Stabilität. Vorzugsweise ist dabei die Rechteckform mit einer langen und einer kurzen Seite derart ausgebildet, dass sich die lange Seite radial oder parallel zu einer Radialen zu der Drehachse der Drehscheibe erstreckt, um in radialer Richtung vorteilhaft zu stützen. Durch das Vorsehen mehrerer Längsstreben, die in Umfangsrichtung beabstandet sind, ist der Niederhalter besonders gewichtssparend und raumsparend ausgebildet. Optional weist die jeweilige Längsstrebe an ihrem der Festscheibe zugewandten Ende eine quer zur Längserstreckung der Längsstrebe erstreckende Ringsegmentstrebe auf, die zur Auflage auf der Festscheibe dient. Dadurch wird die Haltekraft vorteilhaft auf die Festscheibe übertragen und verteilt. Die Ringsegmentstrebe erstreckt sich beispielsweise in Umfangsrichtung der Dichtscheibe symmetrisch beidseitig der Längsstrebe.

Besonders bevorzugt sind zumindest zwei benachbarte Längsstreben des Niederhalters durch eine quer dazu verlaufende Ringstrebe miteinander verbunden. Unter einer Ringstrebe ist in diesem Zusammenhang eine Ringsegementstrebe zu verstehen, die insbesondere eine Kreisringsegmentform aufweist und damit keinen geschlossenen Ring ausbildet. Dadurch ergibt sich eine stabile Verbindung dieser benachbarten Längsstreben miteinander und der Vorteil, dass der Niederhalter vormontiert und einfach in das Ventilgehäuse eingeschoben und positioniert werden kann. Insbesondere ist der Niederhalter derart ausgebildet, dass die Längsstreben durch zumindest einen parallel zu den Dichtscheiben angeordneten Verbindungsring miteinander verbunden sind. Der Verbindungsring ist vorzugsweise koaxial zur Drehachse der Drehscheibe in dem Ventilgehäuse angeordnet oder anordenbar. Vorzugsweise ist der Verbindungsring als Außenring oder Innenring ausgebildet, wobei unter einem Außenring ein Verbindungsring verstanden wird, der sich entlang des Außenrands der Festscheibe oder nah zu einer Mantelwand des Ventilgehäuses, erstreckt, und unter einem Innenring ein Verbindungsring, der radial beabstandet zu dem Außenumfang der Festscheibe näher zu der Drehachse der Drehscheibe angeordnet ist. Optional sind die Längsstreben durch zumindest zwei Verbindungsringe, insbesondere durch einen Innenring und einen Außenring, miteinander verbunden, um die Stabilität des Niederhalters zu erhöhen. Der Innenring und der Außenring liegen dabei beispielsweise auf einer axialen Höhe oder Ebene oder Sie liegen auf unterschiedlichen axialen Höhen oder Ebenen, insbesondere parallel zueinander ausgerichtet.

Besonders bevorzugt weist der zumindest eine Verbindungsring einen Außendurchmesser auf, der dem Außendurchmesser der Festscheibe entspricht oder nahezu entspricht und auf der Festscheibe axial aufliegt. Dadurch liegt der Niederhalter flächig entlang des Verbindungsrings auf der Festscheibe auf und arretiert diese somit vollumfänglich an dem gehäusefesten Vorsprung des Ventilgehäuses. In diesem Fall bildet der Verbindungsring somit den oben beschriebenen Außenring. Bei dem gehäusefesten Vorsprung handelt es sich insbesondere um einen Zwischenboden des Ventilgehäuse.

Gemäß einer bevorzugten Ausführungsform der Erfindung ist der Außendurchmesser der Drehscheibe kleiner als der Außendurchmesser der Festscheibe und der Innendurchmesser des Verbindungsrings größer als der Außendurchmesser der Drehscheibe. Dadurch liegt die Drehscheibe innerhalb des Verbindungsrings auf der Festscheibe auf und lässt einen Randbereich der Festscheibe frei, auf welchem der Verbindungsring aufliegt. Dadurch, dass der Innendurchmesser des Verbindungsrings größer ist als der Außendurchmesser der Drehscheibe, ist ein radialer Abstand zwischen Verbindungsring, insbesondere Außenring, und Drehscheibe gewährleistet, der einen radialen Berührungskontakt zwischen Drehscheibe und Verbindungsring dauerhaft verhindert.

Gemäß einer bevorzugten Weiterbildung der Erfindung ist jede Längsstrebe mit jeweils einer Radialstrebe verbunden, die radial nach innen zu einem weiteren Verbindungsring, insbesondere zu dem innen liegenden Verbindungsring beziehungsweise Innenring, führt. Die Radialstreben sind dabei derart an den Längsstreben angeordnet, dass sie beabstandet zu dem Ende, mit welchen die Längsstreben an der Festscheibe aufliegen, an den Längsstreben enden, sodass die Radialstreben oberhalb der Festscheibe und insbesondere auch oberhalb bzw. axial beabstandet der Drehscheibe verlaufen. Gemäß einem weiteren Ausführungsbeispiel verlaufen die Radialstreben in einem ersten Abschnitt mit geringem oder mit keinem Abstand zu der Festscheibe und in einem zweiten Abschnitt mit geringem axialen Abstand zu der Drehscheibe, wobei der erste Abschnitt radial außen und der zweite Abschnitt radial innen liegt, sodass sich ein axialer Sprung im Verlauf der jeweiligen Radialstrebe ergibt. Durch die Radialstreben ist somit der Außenring mit dem Innenring beziehungsweise der erste Verbindungsring mit dem weiteren Verbindungsring verbunden. Dabei führt die jeweilige Längsstrebe beabstandet zu der Festscheibe oberhalb der Drehscheibe zu dem Verbindungsring, sodass vorzugsweise die Radialstrebe axial beabstandet und damit berührungsfrei zu der Drehscheibe bis zu dem innenliegenden Verbindungsring verläuft. Durch die Radialstreben sind die Verbindungsringe dauerhaft sicher zueinander, insbesondere koaxial zueinander, ausgerichtet.

Besonders bevorzugt ist der Niederhalter einstückig ausgebildet. Das bedeutet, dass die Längsstreben mit dem zumindest einen Verbindungsring oder Verbindungsringsegment und optional mit den Radialstreben einstückig ausgebildet sind. Dadurch ist der Niederhalter in der Montage besonders einfach handhabbar und erlaubt bei geringem Gewicht eine hohe Festigkeit.

Weiterhin ist bevorzugt vorgesehen, dass die Höhe des Verbindungsring, der auf der Festscheibe aufliegt, - in axialer Richtung gesehen - geringfügig größer ist als die Dicke der Drehscheibe in axialer Richtung, sodass die Radialstreben und/oder der zweite Verbindungsring axial beabstandet zu der Drehscheibe liegen. Dies ist insbesondere dann von Vorteil, wenn die Radialstreben axial oberhalb des Verbindungsrings von der jeweiligen Längsstrebe aus nach innen vorstehen.

Erfindungsgemäß weist die jeweilige Längsstrebe zumindest einen Federabschnitt zum Toleranzausgleich in Längserstreckung auf. Die Längsstreben sind somit zumindest bereichsweise elastisch verformbar ausgebildet, um Toleranzen, die bei der Fertigung der Ventileinrichtung auftreten können, ausgleichen zu können. Insbesondere wird dadurch erreicht, dass beim Verschließen des Ventilgehäuses mittels des Deckels die jeweilige Längsstrebe zwischen dem Deckel und der Festscheibe unter elastischer Verformung des Federabschnitts verspannbar oder verspannt ist. Damit ist ein sicheres Schließen des Deckels jederzeit gewährleistet und gleichzeitig auch dass die Längsstrebe einendig stets an dem Deckel und anderendig an der Festscheibe axial anliegt.

Besonders bevorzugt ist der Federabschnitt der jeweiligen Längsstrebe an dem dem Deckel zugewandten Ende der jeweiligen Längsstrebe durch eine seitliche, insbesondere radiale, Aussparung in der jeweiligen Längsstrebe ausgebildet. Durch diese Aussparung in Form eines Freischnitts wird der Querschnitt der jeweiligen Längsstrebe bereichsweise reduziert, wodurch die Längsstrebe in diesem Bereich eine geringere Widerstandskraft gegen ein Verbiegen aufweist. Der verbleibende Querschnitt der Längsstrebe auf Höhe der Aussparung dient dann als elastisch verformbarer Federabschnitt. Insbesondere ist die Aussparung nahe zu dem dem Deckel zugewandten Ende der Längsstrebe angeordnet, sodass die Längsstrebe im Bereich des Deckels einfedern und Toleranzen ausgleichen kann, wenn der Deckel montiert wird.

Vorzugsweise weist der Deckel einen in das Ventilgehäuse vorstehenden, insbesondere ringförmigen oder scheibenförmigen, Vorsprung auf, der zur Auflage auf den Längsstreben dient. Dadurch wird eine präzise Auflage des Deckels auf den Längsstreben zur vorteilhaften Abstützung gewährleistet. Vorzugsweise ist zumindest der Außendurchmesser des Vorsprungs derart gewählt, dass der Deckel mit dem Vorsprung nur auf dem federnden Abschnitt der jeweiligen Längsstrebe aufliegt. Dazu ist der Außendurchmesser insbesondere kleiner gewählt als der Innendurchmesser des Ventilgehäuses und insbesondere kleiner als der Außendurchmesser der Längsstreben, besonders bevorzugt kleiner als der Außendurchmesser der radialen Aussparung der jeweiligen Längsstrebe. Die Aussparung in den Längsstreben ist insbesondere auf der radial innenliegenden Seite der Längsstreben ausgebildet, sodass die Längsstreben nach innen an dem Federabschnitt einfedern können. Durch den Vorsprung ist somit eine gezielte Beaufschlagung der jeweiligen Längsstrebe auf dem Federabschnitt im federnden Bereich gewährleistet.

Vorzugsweise ist der Innendurchmesser des zweiten Verbindungsrings beziehungsweise des innenliegenden Verbindungsrings größer als ein Außendurchmesser des als Schraubenfeder ausgebildeten Federelements. Dadurch ist das Federelement durch den Verbindungsring hindurchführbar, um die Drehscheibe gegen die Festscheibe zu drängen. Der innenliegende Verbindungsring dient dabei außerdem als Führung für die Schraubenfeder.

Weiterhin ist bevorzugt vorgesehen, dass die Radialstreben an ihrer der Drehscheibe zugewandten Unterseite jeweils einen oder mehrere Gleitvorsprünge aufweisen. Durch die Gleitvorsprünge ist gewährleistet, dass für den Fall, dass die Drehscheibe durch den Gegendruck in der gegenüberliegenden Kammer entgegen der Federkraft des Federelements gedrängt werden sollte, der axiale Verschiebeweg der Drehscheibe durch die Gleitvorsprünge begrenzt ist. Außerdem erlauben die Gleitvorsprünge, dass die Drehscheibe auch bei Auftreten von Gegendruck noch sicher verdreht werden kann, da die Gleitvorsprünge vorteilhaft auf der Drehscheibe abgleiten, die Drehscheibe somit nicht an den Radialstreben selbst verklemmt und aufgrund zu hoher Haftreibung festsitzt. Insbesondere weisen die Gleitvorsprünge eine konvex geformte Kontaktfläche auf, um einen vorteilhaften Reibwert zu gewährleisten. Vorzugsweise weist jede der Radialstreben mehrere sich in ihrer Längserstreckung angeordnete Gleitvorsprünge an ihrer Unterseite auf.

Vorzugsweise weist der auf der Festscheibe aufliegende Verbindungsring oder Außenring gleichmäßig über seinen Umfang verteilt angeordnete Vertiefungen auf seiner dem Deckel zugewandten Oberseite auf. Die Vertiefungen sind insbesondere kreissegmentförmig ausgebildet und sind derart in dem Verbindungsring ausgebildet, dass in zumindest einer Drehstellung des Verbindungsrings zumindest eine der Vertiefungen mit einer der Anschlussöffnungen zumindest bereichsweise korrespondiert. Dadurch wird auch bei kleiner axialer Bauhöhe der Ventileinrichtung der Querschnitt eines der Anschlüsse durch den Verbindungsring nicht reduziert. Dadurch, dass die Vertiefungen gleichmäßig über den Umfang verteilt angeordnet sind, kann der Verbindungsring in mehreren Drehstellungen in das Ventilgehäuse eingesetzt werden, in welchen mit der zumindest einen Anschlussöffnung eine der Vertiefungen des Verbindungsrings zusammenwirkt beziehungsweise korrespondiert.

Vorzugsweise ist in einer Mantelwand des Ventilgehäuses für jede der Längsstreben jeweils eine Führungsnut ausgebildet, in welcher die jeweilige Längsstrebe axial verschiebbar und in Umfangsrichtung formschlüssig gehalten ist. Die Längsstreben bilden somit zusammen mit den Führungsnuten in dem Ventilgehäuse eine Drehsicherung für den Niederhalter auf. Bei der Montage wird der Niederhalter mit Längsstreben in die Führungsnuten eingeführt, bis er axial auf der Festscheibe aufliegt. Dadurch, dass die Längsstreben in Umfangsrichtung in der Nut formschlüssig gehalten sind, ist ein Verdrehen des Niederhalters im eingesetzten Zustand nicht mehr möglich. Dadurch ist eine Fehlmontage des Niederhalters verhindert. Insbesondere sind die Vertiefungen an der Oberseite des außenliegenden Verbindungsrings jeweils zwischen zwei benachbarten Längsstreben angeordnet und die Führungsnuten sind derart relativ zu dem zumindest einen Anschluss beziehungsweise der zumindest einen Anschlussöffnung angeordnet, dass in der Montageposition des Niederhalters in dem Ventilgehäuse eine der Vertiefungen des Verbindungsrings fluchtend zu dem Anschluss ausgerichtet beziehungsweise korrespondierend mit diesem angeordnet ist. Durch die Führungsnuten, die Längsstreben und die Ausbildung der Vertiefungen in dem Außenring ist somit eine eindeutige und fehlerfreie Montage des Niederhalters in dem Ventilgehäuse mit Bezug auf den zumindest einen Anschluss stets gewährleistet. Insbesondere ragen die Längsstreben radial geringfügig von dem gegebenenfalls vorhandenen Verbindungsring, der auf der Festscheibe axial aufliegt, vor, sodass die Längsstreben in die Führungsnuten und der Verbindungsring in das Ventilgehäuse einschiebbar sind.

Vorzugsweise weist der Niederhalter genau drei, genau vier oder mehr als vier Längsstreben auf. Weiterhin weist der Niederhalter bevorzugt eine der Anzahl der Längsstreben entsprechende Anzahl von Vertiefungen in der Oberseite des Außenrings auf, wobei die Vertiefungen bevorzugt stets mittig zwischen zwei benachbarten Längsstreben angeordnet sind. Weist das Ventilgehäuse mehrere Anschlüsse, insbesondere Zulaufanschlüsse, für eine der Kammern, insbesondere für die Zulaufkammer/Versorgungskammer, auf, so liegen die Anschlüsse insbesondere auf einer axialen Ebene und in Umfangsrichtung gesehen in einem Abstand zueinander, der dem Abstand der Vertiefungen in der Oberseite des Außenrings entspricht. Dadurch ist eine einfache und eindeutige Zuordnung des Niederhalters zu den Anschlüssen in dem Ventilgehäuse gewährleistet.

Im Folgenden soll die Erfindung anhand der Zeichnung näher erläutert werden. Dazu zeigen
- Figur 1: eine vorteilhafte Ventileinrichtung in einer Längsschnittdarstellung,
- Figur 2: eine Stelleinrichtung der Ventileinrichtung mit einer Dichtscheibeneinheit in einer perspektivischen Darstellung,
- Figur 3: eine perspektivische Längsschnittdarstellung der Stelleinrichtung in einem Ventilgehäuse der Ventileinrichtung,
- Figur 4: eine vergrößerte Detail-Längsschnittdarstellung der Ventileinrichtung im Bereich der Dichtscheibeneinheit,
- Figur 5: eine vereinfachte Draufsicht auf einen Niederhalter der Ventileinrichtung und
- Figur 6: eine Detailschnittdarstellung der Stelleinrichtung.

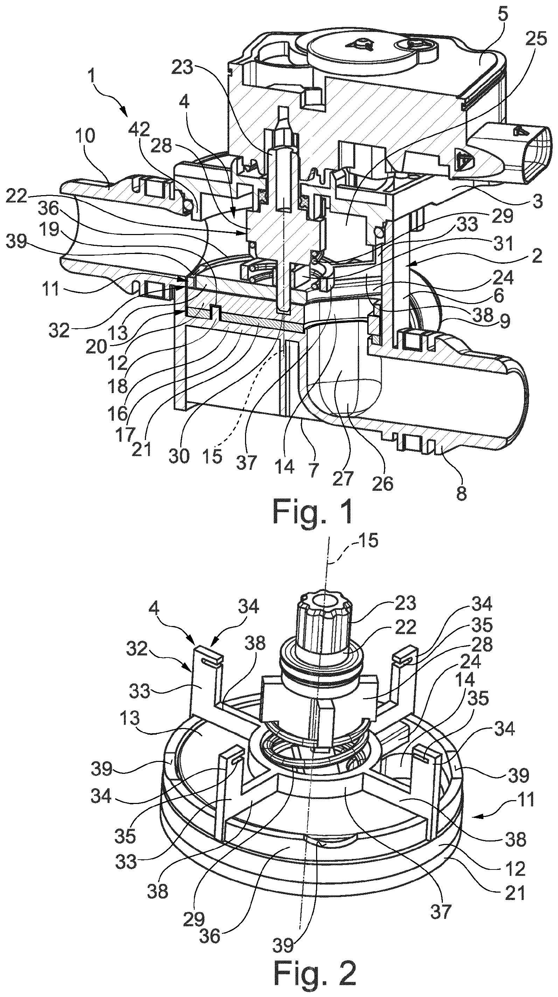

**Figur 1** zeigt in einer perspektivischen Längsschnittdarstellung eine vorteilhafte Ventileinrichtung 1, die beispielsweise für den Einsatz in einem Kühlmittelkreis eines Kraftfahrzeugs einsetzbar ist. Die Ventileinrichtung 1 weist ein Ventilgehäuse 2 mit einem Deckel 3 auf, wobei in dem Ventilgehäuse 2 eine Stelleinrichtung 4 angeordnet ist, die durch einen auf dem Deckel 3 montierten oder montierbaren Aktuator 5 betreibbar ist.

Das Ventilgehäuse 2 weist eine im Wesentlichen kreiszylinderförmige Mantelwand 6 und einen Boden 7 auf, die zusammen mit dem Deckel 3, der auf der dem Boden 7 abgewandten Stirnseite der Mantelwand 6 angeordnet ist, einen Hohlraum einschließen. In der Mantelwand 6 sind über den Umfang der Mantelwand 6 gleichmäßig verteilt mehrere, in **Figur 1** drei erkennbare, Fluidanschlüsse angeordnet , die jeweils eine durch die Mantelwand 6 in den Hohlraum des Ventilgehäuses 2 mündende Anschlussöffnung 8, 9, 10 aufweisen. Die Anschlüsse oder Fluidanschlüsse stehen dabei jeweils radial von der Mantelwand 6 nach außen vor, sodass beispielsweise Anschlussstutzen, -Rohre oder -Schläuche auf die Anschlüsse aufgeschoben werden können, um die Ventileinrichtung 1 in ein Fluidsystem zu integrieren. Die Anschlüsse mit den Anschlussöffnungen 8, 9 liegen dabei auf einer axialen Höhe beziehungsweise auf einer senkrecht zur Axialerstreckung der Mantelwand 6 ausgerichteten Ebene und der Anschluss mit der Anschlussöffnung 10 auf einer axial versetzt dazu liegenden Höhe beziehungsweise Ebene. Insbesondere handelt es sich bei dem Anschluss mit der Anschlussöffnung 10 um einen Zulaufanschluss, durch welchen beispielsweise ein Fluid der Ventileinrichtung 1 zugeführt wird, und bei den Anschlüssen mit den Anschlussöffnungen 8 und 9 um Ablaufanschlüsse, die durch die Stelleinrichtung 4 wahlweise mit dem Zulaufanschluss 10 verbindbar sind, um das zugeführte Fluid weiterzuleiten. Eine Dichtscheibeneinheit 11 der Stelleinrichtung 4 liegt zwischen diesen beiden Ebenen beziehungsweise in Axialerstreckung des Ventilgehäuses 2 gesehen axial zwischen dem Anschluss 10 einerseits und den Anschlüssen 8, 9 andererseits. Optional weist das Ventilgehäuse 2 einen weiteren Anschluss auf, der der Anschlussöffnung 9 diametral gegenüberliegt und auf Höhe der Anschlussöffnung 10 oder auf Höhe der Anschlussöffnung 8 in Axialerstreckung gesehen angeordnet ist.

**Figur 2** zeigt die Stelleinrichtung 4 in einer perspektivischen Darstellung. Die Stelleinrichtung 4 weist die Dichtscheibeneinheit 11 auf, die vorliegend aus zwei Dichtscheiben gebildet ist. Dabei ist eine erste der Dichtscheiben als eine unverdrehbar in dem Ventilgehäuse 2 gehaltene Festscheibe 12 und eine zweite der Dichtscheiben als eine um eine Drehachse 15 drehbar gelagerte Drehscheibe 13 ausgebildet. Die Dichtscheiben 12, 13 sind jeweils kreisförmig ausgebildet, wobei der Außendurchmesser der Dichtscheibe 12 größer ist als der Außendurchmesser der Drehscheibe 13. Die Dichtscheiben 12,13 sind dabei koaxial zueinander und insbesondere auch zur Mantelwand 6 des Ventilgehäuses 2 angeordnet und liegen stirnseitig aneinander an, wie beispielsweise auch in der Schnittdarstellung von **Figur 1** gezeigt. Dadurch dass der Außendurchmesser der Drehscheibe 13 kleiner ist als der der Festscheibe 12, verbleibt auf der der Drehscheibe 13 zugewandten Stirnseite der Festscheibe 12 ein freier, ringförmiger Außenrand, der sich über den gesamten Umfang der Festscheibe 12 erstreckt.

Gemäß dem vorliegenden Ausführungsbeispiel weist die Festscheibe 12 zumindest zwei Durchströmungsöffnungen 14 auf, die sich vollständig axial durch die Festscheibe 12 hindurch erstrecken und von denen in den Figuren nur eine erkennbar ist. Die Durchströmungsöffnungen 14 sind vorliegend randseitig geschlossen und damit als Durchbruch in der Festscheibe 12 ausgebildet, sodass insbesondere der freie ringförmige Außenrand der Festscheibe 12 erhalten bleibt. Die beiden Durchströmungsöffnungen 14 der Festscheibe 12 sind um 90° versetzt in der Festscheibe 12 ausgebildet, sodass im montierten Zustand, wie in **Figur 1** gezeigt, eine erste der Durchströmungsöffnungen 14 der Anschlussöffnung 9 und die weitere der Durchströmungsöffnungen 14 (in den Figuren nicht erkennbar) der Anschlussöffnung 9 zugeordnet ist, die ebenfalls in einem Winkelversatz von 90° zueinander angeordnet sind. Bei der Drehachse 15 handelt es sich um die geometrische Rotationsachse der Festscheibe 12 sowie der Drehscheibe 13 und um die mechanische Rotationsachse der verdrehbaren Drehscheibe 13.

Wie in **Figur 1** gezeigt, liegt die Festscheibe 12 auf einem Zwischenboden 16 des Ventilgehäuses 2 axial auf, der einen gehäusefesten Gehäusevorsprung 17 für die Festscheibe 12 bildet. Der Zwischenboden 16 beziehungsweise der Gehäusevorsprung 17 weist außerdem mindestens einen axial vorstehenden Haltevorsprung 18 auf, der radial beabstandet zu der Mantelwand 6 parallel zu dieser, also axial in Richtung des Deckels 3 vorsteht. Die Festscheibe 12 weist an ihrer von der Drehscheibe 13 abgewandten Unterseite zumindest eine becher- oder wannenförmige Vertiefung 19 auf, also eine Vertiefung, die sich nicht durch die Festscheibe 12 hindurch erstreckt, sondern einen geschlossenen Boden aufweist. Die Vertiefung 19 ist zur zumindest bereichsweisen Aufnahme des Haltevorsprungs 18 ausgebildet, wobei der Querschnitt des Haltevorsprungs 18 zumindest im Wesentlichen dem Querschnitt der Vertiefung 19 entspricht, sodass der Haltevorsprung 18 in Radialerstreckung - bezogen auf die Drehachse 15 - sowie in Umfangsrichtung formschlüssig, insbesondere spielfrei oder nahezu spielfrei, gehalten ist. Dadurch, dass der Haltevorsprung 18 und die Vertiefung 19 außermittig an dem Zwischenboden 16 beziehungsweise in der Festscheibe 12 ausgebildet sind, bewirken diese im montierten Zustand eine Drehsicherung 20, die die Festscheibe 12 an einem Verdrehen innerhalb des Ventilgehäuses 2 hindert.

Der Außendurchmesser der Festscheibe 12 entspricht im Wesentlichen dem Innendurchmesser der Mantelwand 6, wobei gemäß dem bevorzugten Ausführungsbeispiel der Außendurchmesser geringfügig größer ist als der Innendurchmesser der Mantelwand 6, sodass die Festscheibe 12 außerdem in das Ventilgehäuse 2 eingepresst beziehungsweise einpressbar ist. Optional ist zwischen der Festscheibe 12 und dem Gehäusevorsprung 17 außerdem eine dichtende Elastomerscheibe 21 angeordnet, deren Kontur der Kontur der Festscheibe 12 und insbesondere auch des Gehäusevorsprungs 17 beziehungsweise des Zwischenbodens 16 entspricht, also auch entsprechende Durchströmungsöffnungen 14 aufweist, wobei anstelle einer Vertiefung 19 ein Durchbruch in der Elastomerscheibe 21 vorgesehen ist, durch welche der Haltevorsprung 18 hindurch in die Vertiefung 19 der Festscheibe 12 hineinragt, wie in **Figur 1** gezeigt. Damit ist auch die Elastomerscheibe 21 verdrehgesichert in dem Ventilgehäuse 2 auf dem Gehäusevorsprung 17 beziehungsweise auf dem Zwischenboden 16 gelagert.

Wie obenstehend bereits erwähnt, liegt die Drehscheibe 13 stirnseitig auf der Festscheibe 12 auf und weist einen im Vergleich zu dieser verkleinerten Außendurchmesser auf. Die Drehscheibe 13 ist insbesondere mit einer Antriebswelle 22 fest verbunden, die sich axial von der Dichtscheibeneinheit 11 durch den Deckel 3 hinaus bis zu dem Aktuator 5 erstreckt. Die Antriebswelle 22 ist in dem Deckel 3 drehbar gelagert und weist ein Koppelende 23 auf, das mit einem Koppelelement des Aktuators 5 drehfest verbunden oder verbindbar ist. Wird der Aktuator 5, der beispielsweise als Elektromotor ausgebildet ist, angesteuert, so wird durch das Koppelelement ein Drehmoment auf das Koppelende 23 bewirkt, durch welches die Antriebswelle 22 und die damit fest verbundene Drehscheibe 13 in dem Ventilgehäuse 2, insbesondere relativ zu der Festscheibe 12, verdreht wird. Die Drehscheibe 13 weist gemäß dem vorliegenden Ausführungsbeispiel nur eine Durchströmungsöffnung 24 auf, die randoffen ausgebildet ist, die Drehscheibe 13 somit in Umfangsrichtung gesehen auch an ihrem Außenrand unterbricht. Die Durchströmungsöffnung 24 ist derart ausgebildet, dass sie mindestens so groß ist wie die jeweilige Durchströmungsöffnung 14, sodass in einer Überlappungsposition der Dichtscheiben 12,13, die mit einer der Durchströmungsöffnung 14 fluchtende Durchströmungsöffnung 24 den vollen Durchströmungsquerschnitt der betroffenen Durchströmungsöffnung 14 freigibt. Durch Ansteuern des Aktuators 5 und Verdrehen der Drehscheibe 13 ist somit die Durchströmungsöffnung 24 der einen oder der anderen Durchströmungsöffnung 14 zuordenbar.

Die Dichtscheibeneinheit 11 unterteilt den Hohlraum des Ventilgehäuses 2 in mehrere Kammern 25, 26, wobei vorliegend zwei Kammern 26 vorhanden sind, von denen in Figur 1 lediglich zwei erkennbar sind. Die Kammern 25 und 26 liegen axial durch die Dichtscheibeneinheit 11 voneinander getrennt in dem Ventilgehäuse 2. Dabei ist die Kammer 26 dem Anschluss 8 und die Kammer 25 der Anschlussöffnung 10 zugeordnet. Der Anschlussöffnung 9 ist eine weitere Kammer 26 zugeordnet, die ebenfalls durch die Dichtscheibeneinheit 11 von der Kammer 25 getrennt und durch eine Seitenwand 27 auch von der benachbarten Kammer 26 getrennt ist. Den beiden Kammern 26 ist jeweils eine der Durchströmungsöffnungen 14 der Festscheibe 12 zugeordnet. Somit kann durch ein Verdrehen der Drehscheibe 13 der Anschluss 10 entweder mit der Anschlussöffnung 8 oder mit der Anschlussöffnung 9 verbunden werden. Optional sind auch Zwischenstellungen möglich, in welchen die Durchströmungsöffnung 24 bereichsweise oberhalb beider Kammern 26 oder Durchströmungsöffnungen 14 liegt, sodass die Anschlussöffnung 10 mit beiden Anschlussöffnungen 8, 9 fluidtechnisch gleichzeitig verbunden ist.

Die Antriebswelle 22 weist einen Axialanschlag 28 auf, der zur Anlage an dem Deckel 3 dient. Zwischen dem Axialanschlag 28 oder einem weiteren Axialanschlag der Antriebswelle 22 und der Drehscheibe 13 ist weiterhin ein Federelement 29, vorliegend in Form einer Schraubenfeder, die koaxial zu der Antriebswelle 22 angeordnet ist, axial vorgespannt gehalten, sodass durch das Federelement 29 die Drehscheibe 13 mit einer Federkraft beauftragt wird, durch welche die Drehscheibe 13 gegen die Stirnseite der Festscheibe 12 und der Axialanschlag 28 gegen den Deckel 3 gedrängt werden. Das Federelement 29 stützt sich somit durch den Axialanschlag 28 an dem Deckel 3 des Ventilgehäuses 2 ab und sorgt dafür, dass die Dichtscheiben 12,13 der Dichtscheibeneinheit 11 dichtend aneinander liegen.

Die Antriebswelle 22 erstreckt sich vorzugsweise durch die Drehscheibe 13 hindurch bis in eine becherförmige Vertiefung 30 der Festscheibe 12, durch welche die Antriebswelle 22 in der Festscheibe 12 drehbar gelagert ist. Die Drehlagerung der Antriebswelle 22 erfolgt somit einerseits durch den Deckel 3 und andererseits durch die Festscheibe 12. Dabei ist die Antriebswelle 22 insbesondere formschlüssig mit der Drehscheibe 13 drehfest verbunden, optional mithilfe eines Koppelelements 31, das mit der Antriebswelle 22 einerseits und mit der Drehscheibe 13 andererseits zumindest in Drehrichtung formschlüssig verbunden ist.

Die Ventileinrichtung 1 beziehungsweise die Stelleinrichtung 4 weist außerdem einen Niederhalter 32 auf. Der Niederhalter 32 ist axial zwischen dem Deckel 3 und der Festscheibe 12 angeordnet und liegt axial an diesen an. Dadurch wird durch den Niederhalter 32 die Festscheibe 12 auf dem Zwischenboden 16 beziehungsweise dem Gehäusevorsprung 17 in axialer Richtung gehalten und an einem Lösen von diesem gehindert.

**Figur 2** zeigt den Niederhalter 32 ebenfalls in der perspektivischen Darstellung der Stelleinrichtung 4. Der Niederhalter 32 weist gemäß dem vorliegenden Ausführungsbeispiel vier Längsstreben 33 auf, die sich axial von der Festscheibe 12 zu dem Deckel 3 erstrecken und gleichmäßig über den Umfang der Festscheibe 12 verteilt angeordnet sind. Die Längsstreben 33 weisen jeweils einen rechteckförmigen Querschnitt mit einer langen und einer kurzen Seite auf. Die lange Seite erstreckt sich dabei radial oder parallel zu einer Radialen mit Bezug auf die Drehachse 15 von dem Außenumfang der Festscheibe 12 nach innen.

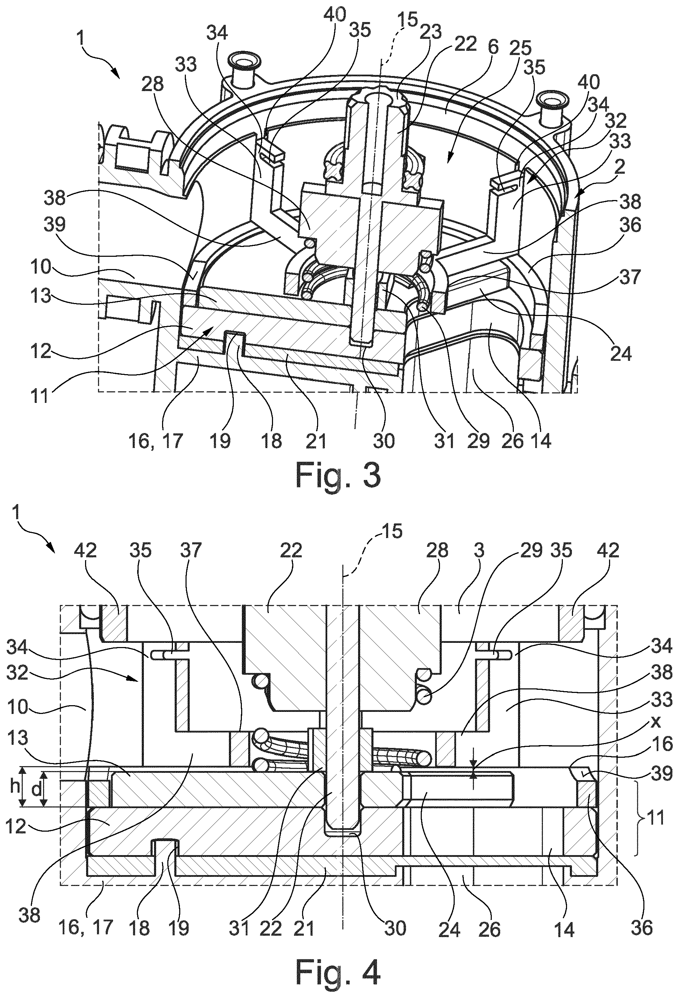

Die Längsstreben 33 weisen an ihrem dem Deckel 3 zugewandten beziehungsweise von der Festscheibe 12 abgewandten Ende jeweils einen Federabschnitt 34 auf, der durch eine Aussparung 35, die sich jeweils von der radialen Innenseite in Richtung der radialen Außenseite der jeweiligen Längsstrebe 33 erstreckt. Dadurch entsteht eine Art Freischnitt an dem Ende der jeweiligen Längsstrebe 33, durch welche das freie Ende an dem radial innenliegenden Abschnitt in Richtung der Festscheibe 12 unter elastischer Verformung des Federabschnitts 34 verschwenkt werden kann. Gemäß dem vorliegenden Ausführungsbeispiel ist die jeweilige Längsstrebe 33 ansonsten federabschnittfrei ausgebildeten und liegt anderendig auf der Festscheibe 12 auf. Der Deckel 3 weist, wie in **Figur 1** **oder** **4** beispielhaft dargestellt, einen axial in den Hohlraum beziehungsweise die Kammer 25 des Ventilgehäuses 2 vorstehenden ring- oder scheibenförmigen Vorsprung 42 auf, der im montierten Zustand der Ventileinrichtung 1 auf den Längsstreben 33 oberhalb der Aussparungen 35 im Bereich der Aussparung 35 aufliegt. Durch die Federabschnitte 34 werden somit Fertigungstoleranzen durch eine elastische Verformung der Federabschnitte 34 bei der Montage vorteilhaft ausgeglichen und außerdem der Niederhalter 32 vorteilhaft gegen die Festscheibe 12 gedrängt.

Optional, und wie in dem vorliegenden Ausführungsbeispiel dargestellt, sind die Längsstreben 33 insbesondere zur Vereinfachung der Montage fest miteinander verbunden. Dazu weist der Niederhalter 32, gemäß dem vorliegenden Ausführungsbeispiel, einen Verbindungsring 36 und einen weiteren Verbindungsring 37 auf. Die Verbindungsringe 36, 37 sind koaxial zueinander ausgerichtet, wobei der Verbindungsring 37 einen Außendurchmesser aufweist, der deutlich kleiner ist als der Innendurchmesser des Verbindungsrings 36. Außendurchmesser und Innendurchmesser des Verbindungsrings 36 sind derart gewählt, dass der Verbindungsring 36 vollständig auf der Festscheibe 12 aufliegt. Der Verbindungsring 36 füllt dabei den Freiraum aus, der durch den im Vergleich zum Außendurchmesser der Festscheibe 12 kleineren Außendurchmesser der Drehscheibe 13 geschaffen ist. Der Außendurchmesser des Verbindungsring 36 ist dazu maximal so groß wie der Außendurchmesser der Festscheibe 12, vorzugsweise ist er geringfügig kleiner, wie in **Figur 2** gezeigt, sodass die Längsstreben 33 radial von dem Verbindungsring 36 vorstehen. Dabei enden die Längsstreben 33 vorzugsweise radial auf Höhe des Außendurchmessers oder Außenumfangs der Dichtscheibe 12.

Der innenliegende Verbindungsring 37 (Innenring) ist durch Radialstreben 38, die zu jeweils einer der Längsstreben 33 führen, mit den Längsstreben 33 verbunden. Die Radialstreben 38 verlaufen axial beabstandet zu der Drehscheibe 13 von der jeweiligen Längsstrebe 33 zu dem Verbindungsring 37, wie beispielhaft in **Figur 4** gezeigt, wo ein Abstand x zwischen Drehscheibe 13 und Radialstrebe 38 eingezeichnet ist. Auch der Verbindungsring 37 liegt axial beabstandet zu der Drehscheibe 13. Dies wird insbesondere dadurch erreicht, dass die Höhe h des Verbindungsrings 36 größer ist als die Dicke d der Drehscheibe 13 - jeweils in axialer Richtung gemessen - ausgebildet ist, sodass die Radialstreben 38 von der Oberseite des Verbindungsring 36 zu dem Verbindungsring 37 verlaufen und dort radial in den Verbindungsring 37 insbesondere einstückig übergehen. Vorzugsweise ist der Niederhalter 32 insgesamt einstückig ausgebildet, sodass die Längsstreben 33, die Radialstreben 38 und die Verbindungsringe 36 und 37 einstückig miteinander ausgebildet sind. Dabei ist der Niederhalter 32 bevorzugt aus einem Kunststoffmaterial gefertigt. Alternativ ist der Verbindungsring 37 aus Metall gefertigt. Gemäß einem weiteren, hier nicht dargestellten Ausführungsbeispiel ist der Niederhalter 32 mehrteilig ausgebildet, wobei insbesondere die Verbindungsringe 36,37, die Radialstreben 38 und die Längsstreben 33 als separate Teile ausgebildet und fest miteinander verbunden sind.

Optional sind außerdem in dem außenliegenden Verbindungsring 36 über den Umfang gleichmäßig verteilt Vertiefungen 39 an der von der Festscheibe 12 abgewandten Oberseite zwischen benachbarten Längsstreben 33 ausgebildet. Die Vertiefungen 39 sind insbesondere konkav ausgebildet, wobei die Vertiefungen 39 in ihrer Form insbesondere mit der Form des Anschluss 10 korrespondieren, wie beispielhaft in **Figur 1** gezeigt. Ist der Verbindungsring 36 in dem Ventilgehäuse 2 derart angeordnet, dass eine Vertiefung 39 beispielsweise mit dem Anschluss 10 fluchtet, so wird erreicht, dass der Durchströmungsquerschnitt des Anschluss 10 durch den Verbindungsring 36 nicht reduziert wird. Wird das Ventilgehäuse 2 insgesamt axial höher ausgebildet, kann auf eine derartige Vertiefung 39 auch verzichtet werden, wenn die Dichtscheibeneinheit 11 zusammen mit dem Verbindungsring 36 axial insgesamt zwischen den Anschlüssen 8, 9 und 10, die auf unterschiedlichen Ebenen liegen, angeordnet ist.

**Figur 3** zeigt eine perspektivische Detailschnittdarstellung der Ventileinrichtung 1, bei welcher nunmehr der Deckel 3 entfernt wurde. Die Mantelwand 6 des Ventilgehäuse 2 weist optional und wie in **Figur 3** dargestellt, mehrere sich axial erstreckende Führungsnuten 40 auf, die insbesondere gleichmäßig über den Umfang der Mantelwand 6 verteilt an deren Innenseite ausgebildet sind. Insbesondere entspricht die Anzahl der Führungsnuten 40 der Anzahl der Längsstreben 33, wobei gemäß dem vorliegenden Ausführungsbeispiel vier Längsstreben 33 vorhanden sind. Grundsätzlich können auch mehr oder weniger Längsstreben 33 vorhanden sein. So ist gemäß einem weiterem Ausführungsbeispiel (hier nicht dargestellt) vorgesehen, dass genau drei Längsstreben 33 oder mehr als vier Längsstreben 33 vorhanden sind. Die Führungsnuten 40 sind zur bereichsweisen Aufnahme an der jeweiligen Längsstrebe 33 ausgebildet. Dazu ist die Breite der jeweiligen Führungsnut 40 nur geringfügig breiter gewählt als die kurze Seite der jeweiligen Längsstrebe 33, sodass die Längsstreben 33 in den Führungsnuten 40 axial verschiebbar geführt sind. Weil die Längsstreben 33 geringfügig von dem Verbindungsring 36 vorstehen, wie oben bereits erwähnt, ist eine sichere Montage und ein Einführen der Längsstreben 33 in die Führungsnuten 40 gewährleistet. Durch die gleichmäßig verteilte Anordnung der Längsstreben 33 sowie der Führungsnuten 40 wird erreicht, dass der Niederhalter 32 in mehreren Drehwinkelpositionen in das Ventilgehäuse 2 einsetzbar ist. Durch die symmetrische Ausbildung des Niederhalters 32 ist dabei eine Fehlmontage nicht möglich. Durch die Führungsnuten 40 und die damit zusammenwirkenden Längsstreben 33 wird eine korrekte Ausrichtung des Niederhalters 32 zu der Anschlussöffnung 10 und insbesondere auch zu den Durchströmungsöffnungen 14 der Festscheibe 12 derart garantiert, dass Durchströmungsquerschnitte durch den Niederhalter 32 nicht beeinträchtigt oder verkleinert werden.

**Figur 4** zeigt eine vergrößerte die Detailschnittdarstellung der Ventileinrichtung 1 im Bereich der Dichtscheibeneinheit 11. In **Figur 4** sind die Dicke d der Drehscheibe 13 sowie die Höhe h des Verbindungsrings 36 eingezeichnet. Aus der Differenz von der Höhe h zu der Dicke d ergibt sich der Abstand x zwischen den Radialstreben 38 und der Drehscheibe 13 in axialer Richtung. Außerdem ist der Innendurchmesser des innenliegenden Verbindungsrings 37 derart gewählt, dass er größer ist als der Außendurchmesser der Schraubenfeder beziehungsweise des Federelements 29, sodass das Federelement 29 durch den Verbindungsring 37 hindurchgeführt ist und axial auf der Drehscheibe 13 aufliegt, um die Drehscheibe 13 gegen die Festscheibe 12 zu pressen.

In **Figur 4** ist auch der Deckel 3 mit dem Vorsprung 42 eingezeichnet. Der Niederhalter 32 ist zwischen dem Deckel 3 und der Festscheibe 12 verspannt gehalten, sodass die Festscheibe 12 stets gegen den Gehäusevorsprung 17 beziehungsweise den Zwischenboden 16 gedrückt ist und sich von diesem auch dann nicht lösen kann, wenn beispielsweise in dem Anschluss 8 ein hydraulischer Druck auftritt, der den Hydraulikdruck in der Kammer 25 beziehungsweise in dem Anschluss 10 übersteigt. Durch den Niederhalter 32 wird garantiert, dass auch bei auftretenden Gegendruckspitzen in dem Anschluss 8 beziehungsweise in einer der Kammern 26 sich die Festscheibe 12 nicht aus ihrer vorbestimmten Position lösen und dadurch beispielsweise die Drehscheibe 13 verschieben oder verschwenken kann. Die Drehscheibe 13 ist selbst geringfügig gemäß dem Abstand x durch einen Gegendruck verlagerbar, wobei der Bewegungsweg durch den inneren Verbindungsring 37 und die Radialstreben 38, die vorzugsweise den gleichen axialen Abstand zu Drehscheibe 13 aufweisen, begrenzt ist. Alternativ ist der Abstand x gleich Null oder nahezu gleich Null, so dass die Drehscheibe 13 axial spielfrei oder nahezu axial spielfrei gehalten ist.

Dadurch wird eine besonders robuste Ventileinrichtung 1 geschaffen, die auch in Hydrauliksystemen eingesetzt werden kann, in welchen unerwartet hohe Gegendrücke insbesondere in einem der Ablaufanschlüsse auftreten können

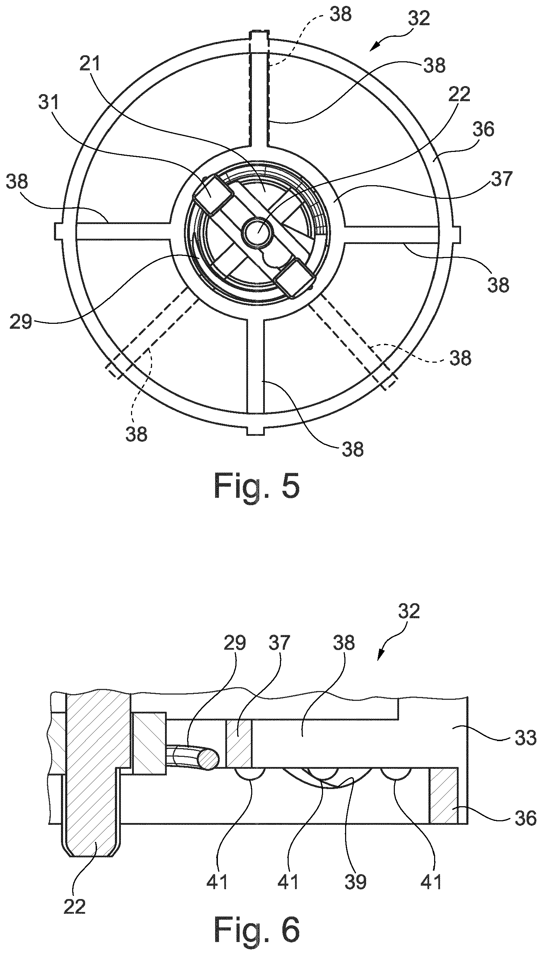

**Figur 5** zeigt in einer vereinfachen Draufsicht - also in axialer Richtung - auf den Niederhalter 32 unterschiedliche Ausführungsbeispiele. Gemäß der durchgezogenen Linie weist der Niederhalter 32, wie auch in den vorhergehenden Figuren gezeigt, vier Längsstreben und Radialstreben 38 auf. In dieser Figur ist auch die bevorzugte Ausbildung zu erkennen, bei welcher die Längsstreben 33 geringfügig radial über den außenliegende Verbindungsring 36 vorstehen. Mit gestrichelten Linien ist in **Figur 5** zusätzlich ein alternatives Ausführungsbeispiel gezeigt, bei welchem der Niederhalter 32 lediglich drei Längsstreben 33 und Radialstreben 38 aufweist. Auch in diesem Fall sind diese jedoch gleichmäßig über den Umfang des Niederhalters 32 verteilt angeordnet und liegen daher in einem Winkel von 120° zueinander. Wie oben bereits erwähnt, kann der Niederhalter 32 jedoch auch mehr als vier Längsstreben und entsprechende Radialstreben 38 aufweist.

**Figur 6** zeigt eine Detailschnittdarstellung der Ventileinrichtung 1 im Bereich einer der Radialstreben 38 gemäß einem weiteren Ausführungsbeispiel. Optional sind an der Unterseite der Radialstreben 38 und/oder an dem Verbindungsring 37 mehrere Gleitvorsprünge 41 angeordnet, die insbesondere konvex geformt sind, um ein gleitendes Anliegen an der Drehscheibe 13 zu gewährleisten. Durch die Gleitvorsprünge 41 wird ein Verklemmen oder Verspannen der Drehscheibe 13 auch bei Auftreten höherer Gegendrücke verhindert.

## Patentansprüche

1. Ventileinrichtung (1) mit einem Ventilgehäuse (2), das wenigstens zwei Anschlussöffnungen (8,9,10) aufweist, die in jeweils eine Kammer (25,26) des Ventilgehäuses (2) münden, und durch einen Deckel (3) verschlossen ist, mit zumindest einer Dichtscheibeneinheit (11), die die beiden Kammern (25,26) voneinander trennt und als Dichtscheiben eine unverdrehbar in dem Ventilgehäuse (2) gehaltene Festscheibe (12) und mindestens eine um eine Drehachse (15) verdrehbar gelagerte Drehscheibe (13) aufweist, wobei die axial aufeinanderliegenden Dichtscheiben jeweils mindestens eine Durchströmungsöffnung (14,24) aufweisen, um in zumindest einer Überlappungsstellung der Durchströmungsöffnungen (14,24) miteinander einen Durchströmungsquerschnitt zwischen den Kammern (25,26) freizugeben, und mit einem Federelement (29), das zwischen der Drehscheibe (13) und dem Deckel (3) vorgespannt gehalten ist, wobei die Festscheibe (12) auf der von der Drehscheibe (13) abgewandten Unterseite auf einem gehäusefesten Vorsprung (17) axial aufliegt, **dadurch gekennzeichnet, dass** in dem Ventilgehäuse (2) ein Niederhalter (32) angeordnet ist, der an der Festscheibe (12) einerseits und an dem Deckel (3) andererseits axial anliegt, dass der Niederhalter (32) mehrere, insbesondere gleichmäßig über den Umfang der Festscheibe (12) verteilt angeordnete, Längsstreben (33) aufweist, die jeweils an der Festscheibe (12) und an dem Deckel (3) axial anliegen, und dass die jeweilige Längsstrebe (33) zumindest einen Federabschnitt (34) zum Toleranzausgleich in Längserstreckung aufweist.

2. Ventileinrichtung nach Anspruch 1, **dadurch gekennzeichnet, dass** die Längsstreben (33) durch zumindest einen parallel zu den Dichtscheiben (12,13) angeordneten Verbindungsring (36,37) miteinander verbunden sind.

3. Ventileinrichtung nach Anspruch 2, **dadurch gekennzeichnet, dass** der Verbindungsring (36) einen Außendurchmesser aufweist, der dem Außendurchmesser der Festscheibe (12) entspricht oder nahezu entspricht und auf der Festscheibe (12) axial aufliegt.

4. Ventileinrichtung nach einem der Ansprüche 2 oder 3, **dadurch gekennzeichnet, dass** ein Außendurchmesser der Drehscheibe (13) kleiner ist als der Außendurchmesser der Festscheibe (12), und dass der Innendurchmesser des Verbindungsrings (36) größer ist als der Außendurchmesser der Drehscheibe (13).

5. Ventileinrichtung nach einem der Ansprüche 2 bis 4, **dadurch gekennzeichnet, dass** jede Längsstrebe (33) mit jeweils einer Radialstrebe (38) verbunden ist, die radial nach innen zu einem weiteren Verbindungsring (37) führt.

6. Ventileinrichtung nach Anspruch 5, **dadurch gekennzeichnet, dass** die Verbindungsringe (36,37) koaxial zueinander ausgerichtet sind.

7. Ventileinrichtung nach einem der vorhergehenden Ansprüche, **dadurch gekennzeichnet, dass** der Niederhalter (32) einstückig ausgebildet ist.

8. Ventileinrichtung nach einem der Ansprüche 2 bis 7, **dadurch gekennzeichnet, dass** der auf der Festscheibe (12) aufliegende Verbindungsring (36) gleichmäßig über seinen Umfang verteilt angeordnete Vertiefungen (39) auf seiner dem Deckel (3) zugewandten Oberseite aufweist.

9. Ventileinrichtung nach Anspruch 8, **dadurch gekennzeichnet, dass** in einer Mantelwand (6) des Ventilgehäuses (2) für jede der Längsstreben (33), die insbesondere geringfügig von dem auf der Festscheibe aufliegenden Verbindungsring (36) radial vorstehen, jeweils eine Führungsnut (40) ausgebildet ist, in welcher die jeweilige Längsstrebe (33) axial verschiebbar und in Umfangsrichtung formschlüssig gehalten ist.

10. Ventileinrichtung nach einem der Ansprüche 8 oder 9, **dadurch gekennzeichnet, dass** die Höhe (h) des auf der Festscheibe (12) aufliegenden Verbindungsrings (36) geringfügig höher ist als die Dicke (d) der Drehscheibe (13) in axialer Richtung, sodass die Radialstreben (38) und/oder der weitere Verbindungsring (37) axial beabstandet zu der Drehscheibe (13) liegen.

11. Ventileinrichtung nach einem der vorhergehenden Ansprüche, **dadurch gekennzeichnet, dass** der Federabschnitt (34) an dem dem Deckel (3) zugewandten Ende der jeweiligen Längsstrebe (33) durch zumindest eine seitliche, insbesondere radiale Aussparung (35) in der jeweiligen Längsstrebe (33) ausgebildet ist.

12. Ventileinrichtung nach einem der Ansprüche 2 bis 11, **dadurch gekennzeichnet, dass** der Deckel (3) einen in das Ventilgehäuse (2) vorstehenden Vorsprung (42) aufweist, der zur Auflage auf den Längsstreben (33) dient.

13. Ventileinrichtung nach Anspruch 12, **dadurch gekennzeichnet, dass** der Außendurchmesser des Vorsprungs (42) derart ausgebildet ist, dass der Deckel (3) mit dem Vorsprung (42) nur auf dem federnden Abschnitt der jeweiligen Längsstrebe (33) aufliegt.

14. Ventileinrichtung nach einem der Ansprüche 2 bis 13, **dadurch gekennzeichnet, dass** der Niederhalter (32) genau drei, genau vier oder mehr als vier Längsstreben (33) aufweist.

15. Ventileinrichtung nach einem der Ansprüche 5 bis 14, **dadurch gekennzeichnet, dass** die Radialstreben (38) an ihrer der Drehscheibe (13) zugewandten Unterseite einen oder mehrere Gleitvorsprünge (41) aufweist.

## Claims

1. Valve device (1) with a valve housing (2) which comprises at least two connection openings (8,9,10), each of which opens into a chamber (25,26) of the valve housing (2), and is closed by a cover (3), with at least one sealing disk unit (11), which separates the two chambers (25,26) from one another and which comprises - as sealing disks - a fixed disk (12) held non-rotatably in the valve housing (2) and at least one rotating disk (13) mounted rotatably around an axis of rotation (15), wherein the sealing disks resting axially on one another each comprise at least one flow opening (14,24), in order to release a flow cross section between the chambers (25,26) in at least one overlapping position of the flow openings (14,24) with one another, and with a spring element (29), which is held pre-tensioned between the rotating disk (13) and the cover (3), wherein the fixed disk (12) rests axially on the lower side, facing away from the rotating disk (13), on a housing-fixed projection (17), **characterised in that** a hold-down device (32) is arranged in the valve housing (2), which rests axially on the fixed disk (12), on the one hand, and on the cover (3), on the other hand, that the hold-down device (32) comprises multiple longitudinal struts (33), in particular arranged evenly distributed over the circumference of the fixed disk (12), which each rest axially against the fixed disk (12) and the cover (3), and that the respective longitudinal strut (33) comprises at least one spring section (34) for tolerance compensation in the longitudinal extension.

2. Valve device according to claim 1, **characterised in that** the longitudinal struts (33) are connected to one another by at least one connecting ring (36,37) arranged parallel to the sealing disks (12,13).

3. Valve device according to claim 2, **characterised in that** the connecting ring (36) comprises an outer diameter which corresponds or nearly corresponds to the outer diameter of the fixed disk (12) and rests axially on the fixed disk (12).

4. Valve device according to any one of the claims 2 or 3, **characterised in that** an outer diameter of the rotating disk (13) is smaller than the outer diameter of the fixed disk (12), and **in that** the inner diameter of the connecting ring (36) is larger than the outer diameter of the rotating disk (13).

5. Valve device according to any one of the claims 2 to 4, **characterised in that** each longitudinal strut (33) is connected to a respective radial strut (38) which leads radially inwards to a further connecting ring (37).

6. Valve device according to claim 5, **characterised in that** the connecting rings (36,37) are aligned coaxially with one another.

7. Valve device according to any one of the preceding claims, **characterised in that** the hold-down device (32) is formed in one piece.

8. Valve device according to any one of the claims 2 to 7, **characterised in that** the connecting ring (36) resting on the fixed disk (12) comprises depressions (39) arranged evenly distributed over its circumference on its upper side facing toward the cover (3).

9. Valve device according to claim 8, **characterised in that,** in a jacket wall (6) of the valve housing (2), for each of the longitudinal struts (33), which in particular slightly protrude radially from the connecting ring (36) resting on the fixed disk, a respective guide groove (40) is formed, in which the respective longitudinal strut (33) is axially displaceable and held in a formfitting manner in the circumferential direction.

10. Valve device according to any one of the claims 8 and 9, **characterised in that** the height (h) of the connecting ring (36) resting on the fixed disk (12) is slightly taller than the thickness (d) of the rotating disk (13) in the axial direction, so that the radial struts (38) and/or the further connecting ring (37) lie axially spaced apart from the rotating disk (13).

11. Valve device according to any one of the preceding claims, **characterised in that** the spring section (34) at the end of the respective longitudinal strut (33) facing toward the cover (3) is formed by at least one lateral, in particular radial recess (35) in the respective longitudinal strut (33).

12. Valve device according to any one of the claims 2 to 11, **characterised in that** the cover (3) comprises a projection (42) which protrudes into the valve housing (2) and which is used to rest on the longitudinal struts (33).

13. Valve device according to claim 12, **characterised in that** the outer diameter of the projection (42) is designed such that the cover (3) with the projection (42) only rests on the resilient section of the respective longitudinal strut (33).

14. Valve device according to any one of the claims 2 to 13, **characterised in that** the hold-down device (32) comprises exactly three, exactly four, or more than four longitudinal struts (33).

15. Valve device according to any one of the claims 5 to 14, **characterised in that** the radial struts (38) comprise one or more sliding projections (41) on their lower side facing toward the rotating disk (13).

## Revendications

1. Dispositif de vanne (1) comportant un corps de vanne (2) présentant au moins deux orifices de connexion (8,9,10), chacun débouchant dans une chambre (25,26) respective du corps de vanne (2), et fermé par un couvercle (3), comportant au moins une unité de disque d'étanchéité (11) qui sépare les deux chambres (25,26) l'une de l'autre et présente, comme disques d'étanchéité, un disque fixe (12) maintenu de manière non rotative dans le corps de vanne (2) et au moins un disque tournant (13) monté de manière pivotante autour d'un axe de rotation (15), dans lequel les disques d'étanchéité disposés axialement l'un sur l'autre présentent chacun au moins une ouverture d'écoulement (14,24), afin de libérer, dans au moins une position de recouvrement mutuel des ouvertures d'écoulement (14,24), une section de passage d'écoulement entre les chambres (25, 26), et comportant un élément ressort (29) maintenu en précontrainte entre le disque tournant (13) et le couvercle (3), dans lequel le disque fixe (12) repose axialement, sur sa face inférieure opposée au disque tournant (13), sur une saillie (17) solidaire du corps du boîtier, **caractérisé en ce que,** dans le corps de vanne (2), est disposé un organe de maintien (32) qui prend appui axialement, d'une part, sur le disque fixe (12) et, d'autre part, sur le couvercle (3), **en ce que** l'organe de maintien (32) présente plusieurs entretoises longitudinales (33), en particulier disposées de manière uniformément répartie sur le pourtour du disque fixe (12), lesquelles prennent chacune appui axialement sur le disque fixe (12) et sur le couvercle (3), et **en ce que** l'entretoise longitudinale (33) correspondante présente au moins une section ressort (34) destinée à la compensation des tolérances dans le sens longitudinal.

2. Dispositif de vanne selon la revendication 1, **caractérisé en ce que** les entretoises longitudinales (33) sont reliées entre elles par au moins un anneau de liaison (36,37) disposé parallèlement aux disques d'étanchéité (12,13).

3. Dispositif de vanne selon la revendication 2, **caractérisé en ce que** l'anneau de liaison (36) présente un diamètre extérieur correspondant ou sensiblement correspondant au diamètre extérieur du disque fixe (12) et repose axialement sur le disque fixe (12).

4. Dispositif de vanne selon l'une quelconque des revendications 2 ou 3, **caractérisé en ce qu'**un diamètre extérieur du disque tournant (13) est inférieur au diamètre extérieur du disque fixe (12), et **en ce que** le diamètre intérieur de l'anneau de liaison (36) est supérieur au diamètre extérieur du disque tournant (13).

5. Dispositif de vanne selon l'une quelconque des revendications 2 à 4, **caractérisé en ce que** chaque entretoise longitudinale (33) est reliée à une entretoise radiale (38) respective, qui s'étend radialement vers l'intérieur jusqu'à un autre anneau de liaison (37).

6. Dispositif de vanne selon la revendication 5, **caractérisé en ce que** les anneaux de liaison (36,37) sont disposés coaxialement l'un par rapport à l'autre.

7. Dispositif de vanne selon l'une des revendications précédentes, **caractérisé en ce que** le dispositif de retenue (32) est formé d'une seule pièce.

8. Dispositif de vanne selon l'une quelconque des revendications 2 à 7, **caractérisé en ce que** l'anneau de liaison (36) reposant sur le disque fixe (12) présente, sur sa face supérieure tournée vers le couvercle (3), des évidements (39) disposés de manière uniformément répartie sur son pourtour.

9. Dispositif de vanne selon la revendication 8, **caractérisé en ce que,** dans une paroi latérale (6) du corps de vanne (2), est ménagée, pour chacune des entretoises longitudinales (33), lesquelles font en particulier légèrement saillie radialement par rapport à l'anneau de liaison (36) reposant sur le disque fixe, une rainure de guidage (40) respective dans laquelle l'entretoise longitudinale (33) correspondante est montée de manière axialement coulissante et maintenue par complémentarité de forme dans la direction circonférentielle.

10. Dispositif de vanne selon l'une quelconque des revendications 8 ou 9, **caractérisé en ce que** la hauteur (h) de l'anneau de liaison (36) reposant sur le disque fixe (12) est légèrement supérieure à l'épaisseur (d) du disque tournant (13) dans la direction axiale, de sorte que les entretoises radiales (38) et/ou l'autre anneau de liaison (37) sont disposés axialement à distance du disque tournant (13).

11. Dispositif de vanne selon l'une quelconque des revendications précédentes, **caractérisé en ce que** la section ressort (34), située à l'extrémité de l'entretoise longitudinale (33) correspondante tournée vers le couvercle (3), est formée par au moins une découpe latérale, en particulier radiale (35), pratiquée dans l'entretoise longitudinale (33) correspondante.

12. Dispositif de vanne selon l'une quelconque des revendications 2 à 11, **caractérisé en ce que** le couvercle (3) présente une saillie (42) dépassant dans le corps de vanne (2), destinée à servir d'appui sur les entretoises longitudinales (33).

13. Dispositif de vanne selon la revendication 12, **caractérisé en ce que** le diamètre extérieur de la saillie (42) est conçu de sorte que le couvercle (3), avec la saillie (42), ne repose que sur la section ressort de l'entretoise longitudinale (33) correspondante.

14. Dispositif de vanne selon l'une quelconque des revendications 2 à 13, **caractérisé en ce que** l'organe de maintien (32) présente exactement trois, exactement quatre ou plus de quatre entretoises longitudinales (33).

15. Dispositif de vanne selon l'une quelconque des revendications 5 à 14, **caractérisé en ce que** les entretoises radiales (38) présentent, sur leur face inférieure tournée vers le disque tournant (13), un ou plusieurs talons de glissement (41).
